# EUROPEAN PATENT APPLICATION

(11) **EP 0 909 054 A2**
(43) Date of publication of application: **14.04.1999**
(21) Application number: 98117496.4
(22) Date of filing: 15.09.1998
(51) Int. Cl.: H04J 14/02, H04L 1/22, H04B 10/213

(54) **Light-wave network system with fault recovery**

(30) Priority: 16.09.1997 JP 268256/97
(71) Applicant: NEC CORPORATION, Tokyo (JP)
(72) Inventor: Takeshita, Hitoshi, Minato-ku, Tokyo (JP); Henmi, Naoya, Minato-ku, Tokyo (JP)
(74) Representative: VOSSIUS & PARTNER

(57) **Abstract**

Disclosed is a light-wave network system using wavelength and space multiplexing, which has: a plurality of network elements which are connected each other through an optical fiber; and n optical signal transmitting and receiving means, which are provided to each of the plurality of network elements, for transmitting and receiving an optical signal which is not dependent on any transmission speed and format and is provided with n wavelengths λ1 to λn different from each other; wherein, of the n wavelengths, (n-s) wavelengths are assigned to a working system and s wavelength is assigned to a stand-by system, and the s stand-by-system wavelength is jointly owned by the (n-s) working-system wavelengths, where n and s are positive integers and n>2s is satisfied.

## Description

This invention relates to a wavelength division multiplexing (WDM) technique in optical communications/optical exchanging, and more particularly to, an optical communication/optical exchanging system using an economical and flexible network fault recovering technique.

WDM (wavelength division multiplexing), in which multiplexed signal lights with many different carrier light wavelengths are transmitted through one optical fiber, is a technique useful to increase the transmission capacity. Also, a flexible network composition can be realized by setting a transmission path for each of the multiplexed wavelength channels.

To prepare for a sudden link connection fault caused by fiber disconnection etc. in a network, a working system and a stand-by system are provided for each channel. When the working system is broken down, network fault recovering is conducted by switching to the stand-by system. Therefore, for example, when n different wavelengths are used, the number of optical transmitting and receiving means to be provided for one network element becomes 2n, which includes n working systems and n stand-by systems. Namely, devices of double number are needed, and therefore the cost and device size must be doubled.

Though providing the stand-by system other than the working system is important to enhance the reliability of network, there are demerits such as a high cost and an increased device volume because two same systems are necessary when a stand-by system used only for a working system is provided. Accordingly, to obtain a reliable and economical network, an economical network fault recovering system is required.

Some systems in which a working channel and a stand-by channel are provided in a wavelength channel, without disposing working and stand-by devices, to reduce the hardware size have been proposed. For example, Japanese patent application laid-open No. 8-195972 (1996) discloses a method of using a working wavelength and a stand-by wavelength. However, it does not describe about any method to assign the working and stand-by wavelengths when a fault occurs in the network.

Also, Japanese patent application laid-open No.9-51560 (1997) discloses a system that a working path and a stand-by path are reasonably set as well as defining optical paths. However, in this system, when a fault occurs in the optical transmission line, to search all optical paths included in the network and to relocate the working and stand-by paths arc required. Therefore, the load of controlling the optical-path search may become heavy and it may take a long time to relocate them. Also, it does not describe about any way to recover a fault in the optical transmitting and receiving device itself. Further, when a fault occurs in the working-system optical transmitting and receiving device, the network connection state needs to be renewed and therefore all nodes in the network has to terminate their stand-by paths.

Accordingly, it is an object of the invention to provide an economical light-wave network system with high reliability.

According to the invention, a light-wave network system using wavelength and space multiplexing, comprises:
a plurality of network elements which are connected each other through an optical fiber; and
n optical signal transmitting and receiving means, which are provided to each of the plurality of network elements, for transmitting and receiving an optical signal which is not dependent on any transmission speed and format and is provided with n wavelengths λ1 to λn different from each other:
   wherein, of the n wavelengths, (n-s) wavelengths are assigned to a working system and s wavelength is assigned to a stand-by system, and the s stand-by-system wavelength is jointly owned by the (n-s) working-system wavelengths, where n and s are positive integers and n>2s is satisfied.

According to another aspect of the invention, a light-wave network system using wavelength and space multiplexing, comprises:
a plurality of network elements which are connected each other through an optical fiber: and
n optical signal transmitting and receiving means, which are provided to each of the plurality of network elements, for transmitting and receiving an optical signal which is not dependent on any transmission speed and format and is provided with a plurality of wavelengths different from each other:
   wherein the plurality of wavelengths are divided into a plurality of groups each of which includes a plurality of wavelengths different from each other, the plurality of wavelengths in each of the plurality of groups are assigned to a plurality of working-system wavelengths and to a stand-by-system wavelength less than the working-system wavelengths, and the stand-by-system wavelength is jointly owned by the working-system wavelengths.

According to another aspect of the invention, a light-wave network system using wavelength and space multiplexing, comprises:
a plurality of network elements which are connected each other through an optical fiber; and
(n x m) optical signal transmitting and receiving means, which are provided to each of the plurality of network elements, for transmitting and receiving an optical signal which is not dependent on any transmission speed and format and is provided with (n x m) wavelengths λ1 to λnm different from each other;
   wherein the (n x m) wavelengths λ1 to λnm are divided into m groups, of n wavelengths in each of the m groups, (n-s) wavelengths are assigned to working-system wavelengths and a s wavelength is assigned to a stand-by-system wavelength, and the stand-by-system wavelength of s is jointly owned by the working-system wavelengths of (n-s), where m, n and s are positive integers and n>2s is satisfied.

In this invention, one or a few stand-by-system optical signal transmitting and receiving means and wavelength is provided to a plurality of working-system optical signal transmitting and receiving means and wavelengths. Thereby, when a fault occurs in a working system, it can be switched to a free stand-by system by selecting it. Therefore, resources being useless when no fault occurs can be reduced. Thus, an economical light-wave network system with high reliability can be obtained.

Also, the device utilization efficiency in the system when no fault occurs is increased in reverse proportion to the number of multiplexed wavelengths, and the throughput of the system is also increased. Namely, the larger the number of multiplexed wavelengths is, the higher the device utilization efficiency in the system is. Therefore, a more economical and efficient operation can be conducted.

Furthermore, in this invention, by transmitting and receiving an optical signal at each wavelength by utilizing WDM, an optical signal through a wavelength channel can be transmitted and received without affecting another wavelength channel with a different wavelength. Thus, signal multiplexing not dependent on any transmission speed and format can be conducted.

The invention will be explained in more detail in conjunction with the appended drawings, wherein:
FIG.1 is a block diagram showing a light-wave network system in a first preferred embodiment according to the invention,
FIG.2 is a block diagram showing a specific example of light-wave network system in the first embodiment,
FIG.3 is a block diagram showing a light-wave network system in a second preferred embodiment according to the invention, and
FIG.4 is a block diagram showing a specific example of light-wave network system in the second embodiment.

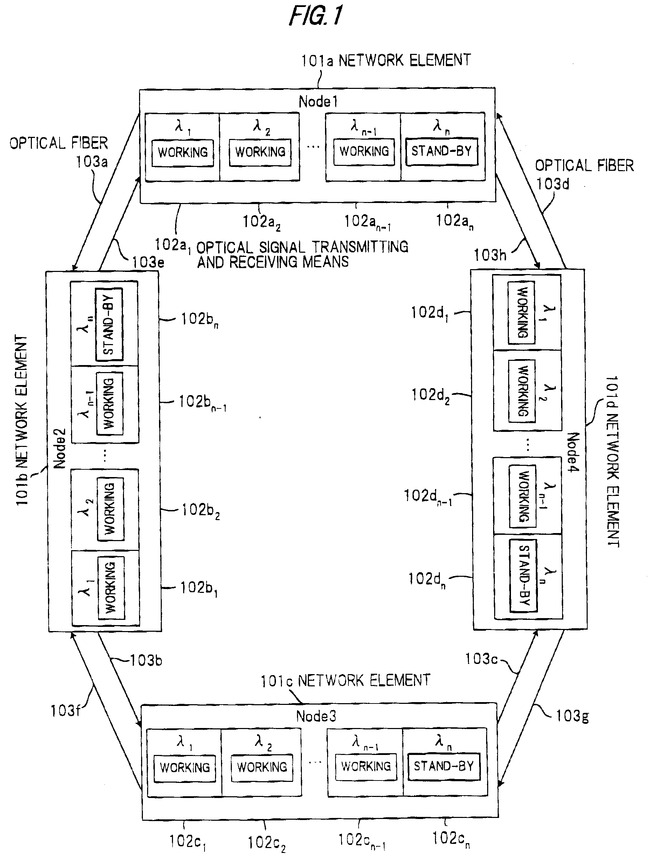

A light-wave network system in the first preferred embodiment according to the invention will be explained in FIG.1.

In FIG. 1, the light-wave network system is so composed that network elements 101a to 101d are connected, in the form of a ring, through optical fibers 103a to 103g.

The network element 101a is provided with means, 102a₁, 102a₂, ... 102aₙ₋₁ and 102aₙ, for transmitting and receiving optical signals with wavelengths λ1, λ2, ... λn-1 and λn, respectively. Similarly, the network elements 101b to 101d are Provided with means for transmitting and receiving optical signals with the wavelengths λ1, λ2, ... λn-1 and λn, respectively. An optical signal is transmitted counterclockwise through the optical fibers 103a to 103d, and is transmitted clockwise through the optical fibers 103e to 103h.

Also, the wavelengths λ1, λ2, ... λn-1 and λn are different from each other. The wavelengths λ1, λ2, ... λn-1 are assigned to working-system wavelengths, and the wavelength λn is assigned to a stand-by-system wavelength. An optical signal to be transmitted using the working-system wavelength between the network elements is not specialized, and it can be a signal available for, e.g., a dynamic image, voice and a data communications service and is not dependent on any transmission speed and format.

Next, referring to FIG. 1, the operation of the light-wave network system in the first embodiment will be explained. For example, when the network element 101a communicates, using the wavelength λ1, with the network element 101b, the network element 101c can obtain an optical signal with the wavelength λ1 through the optical fibers 103b and 103g. The network element 101c selects an optical signal with the wavelength λ1 transmitted clockwise through the optical fiber 103g when no fault occurs in the network. Also, an optical signal to be transmitted from the network element 101c to the network element 101a is transmitted clockwise through the optical fiber 103. Namely, the clockwise path is used for the working system, and the counterclockwise path is used for the stand-by system.

When a fault occurs in the clockwise path from the network element 101a until the network element 101c due to some cause, the network element 101c selects an optical signal with the wavelength λ1 counterclockwise transmitted from the network element 101a through the optical fiber 103b, thereby conducting the fault recovering. Similarly, when a fault occurs in the clockwise path from the network element 101c until the network element 101a, the network element 101c selects an optical signal with the wavelength λ1 counterclockwise transmitted from the network element 101a, thereby conducting the fault recovering

Also, when a fault occurs it the transmitting and receiving means 102c₁ in the network element 101c, it is switched to the transmitting and receiving means for the stand-by-system wavelength λn that is jointly owned by the working-system wavelengths λ1, λ2, ... λn-1. In this case, a manager to conduct the network management by a centralized or decentralized control system confirms, in advance, that the stand-by wavelength is not selected as a stand-by system for the other working-system wavelength, then notifying the respective net work elements of that. Then, by switching the carrier wavelength of an optical signal communicated, using the wavelength λ1, between the transmitting and receiving means 102a₁ and 102c₁ in the network elements 101a and 101c, respectively, to the stand-by-system wavelength λn, and communicating it between the transmitting and receiving means 102aₙ and 102cₙ, the fault is recovered. Thereafter, when the transmitting and receiving means 102c₁, where the fault occurred, for the wavelength λ1 is recovered, the wavelength λn is switched back to the wavelength λ1 to make the wavelength λn available again as the stand-by wavelength. Alternatively, the network manager mentioned above may redefine the wavelength λ1 as a stand-by wavelength, and thereby the wavelength λ1 can be used as a stand-by-system wavelength for the network elements 101a to 101d.

If a stand-by system is assigned to each of the working-system transmitting and receiving means with the wavelengths λ1 to λ n-1, the device utilization efficiency is 1/2 when no fault occurs. In contrast with this, when the transmitting and receiving means of the stand-by-system wavelength λn is jointly owned by the working-system wavelengths λ1 to λn-1, the device utilization efficiency is (1-(1/n)) when no fault occurs. Thus, in this embodiment, a low-cost and efficient system can be installed and operated.

Meanwhile, though not shown in FIG.1, each of the network elements 101a to 101d is provided with means for judging a communication fault caused by some trouble in the optical signal transmitting and receiving means and a communication fault caused by disconnection of optical fiber, means for switching a working-system wavelength, where a fault occurs, to the stand-by-system wavelength when the fault occurs at the optical transmitting and receiving means in the network, and means for switching to the stand-by-system optical fiber when a fault due to the disconnection of the working-system optical fiber occurs.

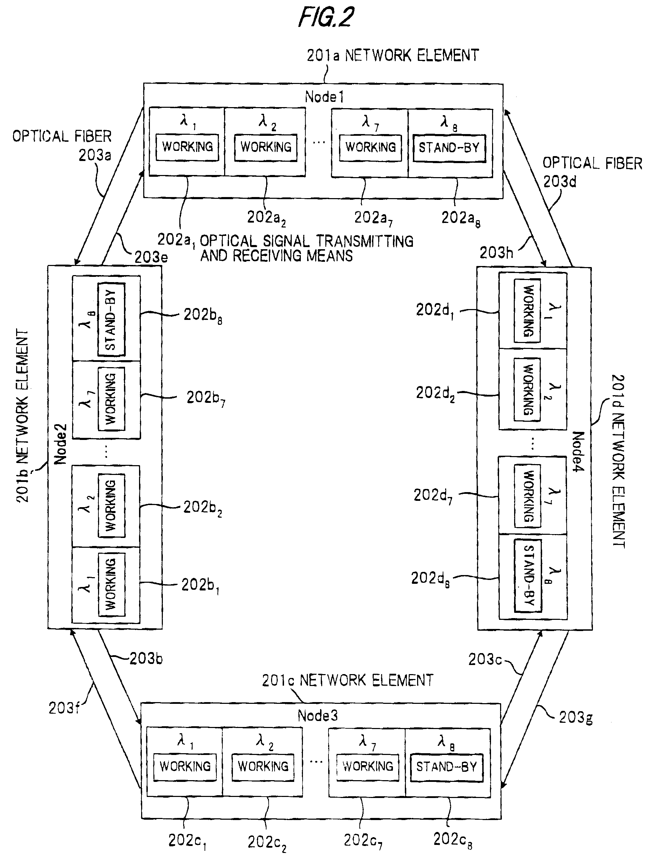

FIG.2 shove an example of the first embodiment, where the total number of wavelengths used is eight, wavelengths λ1 to λ7 are assigned to the working system and a wavelength λ8 is assigned to the stand-by system. The operation of this example is the same as that described above about the first embodiment in FIG. 1. In this example, the device utilization efficiency is 7/8 when no fault occurs. Namely, in this example, the installation and operation cost can be improved by about 40%.

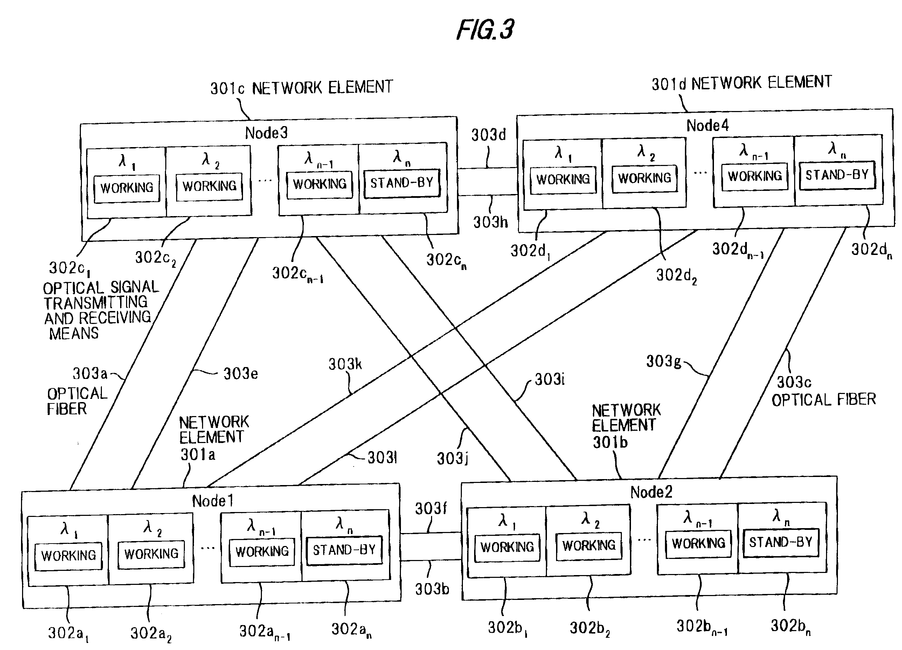

A light-wave network system in the second preferred embodiment according to the invention will be explained in FIG.3.

In FIG.3, the light-wave network system is so composed that network elements 301a to 301d are connected, in the form of a mesh, through optical fibers 303a to 303l.

The network element 301a is provided with means, 302a₁, 302a₂, ... 302aₙ₋₁ and 302aₙ, for transmitting and receiving optical signals with wavelengths λ1, λ2, ... λn-1 and λn, respectively. Similarly, the network elements 301b to 301d are provided with means for transmitting and receiving optical signals with the wavelengths λ1, λ2, ... λn-1 and λn, respectively. Also, the wavelengths λ1, λ2, ... λn-1 and λn are different from each other. The wavelengths λ1, λ2, ... λn-1 are assigned to working-system wavelengths, and the wavelength λn is assigned to a stand-by-system wavelength. Similarly to the first embodiment, an optical signal to be transmitted using the working-system wavelength between the network elements is not specialized, and it can be a suitable signal for, e.g., a dynamic image, voice and a data communications service, to be transmitted and is not dependent on any transmission speed and format.

Next, referring to FIG. 3, the operation of the light-wave network system in the second embodiment will be explained. For example, when the network element 301a communicates, using the wavelength λ1, with the network element 301d, an optical signal with the wavelength λ1 output from the network element 301s is transmitted through the optical fiber 303k to the optical signal transmitting and receiving means 302d₁ for the wavelength λ1 of the network element 301d. When the optical-signal transmission through the optical fiber 303k is disconnected, the network element 301a can transmit an optical signal with the wavelength λ1 to the optical signal transmitting and receiving means 302d₁ for the wavelength λ1 by using such a protection path that the optical signal with the wavelength λ1 transmitted through the optical fiber 303k can be transmitted through the network element 301b to the network element 301d. Thereby, the fault can be recovered.

This protection path may be given by setting a stand-by system for each of the network elements while a manager to conduct the network management by a centralized or decentralized control system searches the utilization situation of the optical fibers 303a to 303l in the network after the fault occurs, or by setting, in advance, a working system and a stand-by system before the fault occurs. In case of setting in advance, the optical signal transmitting and receiving means 302d₁ may select one of the path to connect through the optical fiber 303k directly to the network element 301d and the path to connect through the network element 301b to the network element 301d after transmitting a same optical signal simultaneously to both the paths.

Also, when a fault occurs at the optical signal transmitting and receiving means 302a₁ for the wavelength λ1 in the network element 301a, an optical signal to be transmitted to the optical signal transmitting and receiving means 302a₁ is switched to the optical signal transmitting and receiving means 302aₙ for the wavelength λn. Thereby, the optical signal is transmitted to the network element 301d by the wavelength λn, using the optical fiber 303k. In this case, the network manager confirms, in advance, that the wavelength λn is available, then notifying the respective network elements of that. Also, on the side of the network element 301d, the switching from the wavelength λ1 to the wavelength λn is conducted, and the optical signal transmitting and receiving means 302dₙ for the wavelength λn receives the optical signal with the wavelength λn from the network element 301a. Also when a fault occurs, on the contrary, at the optical signal transmitting and receiving means 302d1 for the wavelength λ1 in the network element 301d, the switching from the wavelength λ1 to the wavelength λn is similarly conducted, thereby recovering the fault.

Thereafter, when the transmitting and receiving means 302a₁, where the fault occurred and was not available, for the wavelength λ1 in the network element 301a is recovered, the wavelength λn is switched back to the wavelength λ1. Therefore, the wavelength λn can be used again as the stand-by wavelength for the working-system wavelengths λ1 to λn. Alternatively, the network manager may redefine the wavelength λ1 as a stand-by wavelength. In this case, it is not necessary to switch the wavelength λn back to the wavelength λ1.

If a stand-by system is assigned to each of the working-system transmitting and receiving means with the wavelengths λ1 to λn-1, the device utilization efficiency is 1/2 when no fault occurs. In contrast with this, when the transmitting and receiving means of the stand-by-system wavelength λn is jointly owned by the working-system wavelengths λ1 to λn-1, the device utilization efficiency is (1-(1/n)) when no fault occurs. Thus, in this embodiment, a low-cost and efficient system can be installed and operated, like the first embodiment.

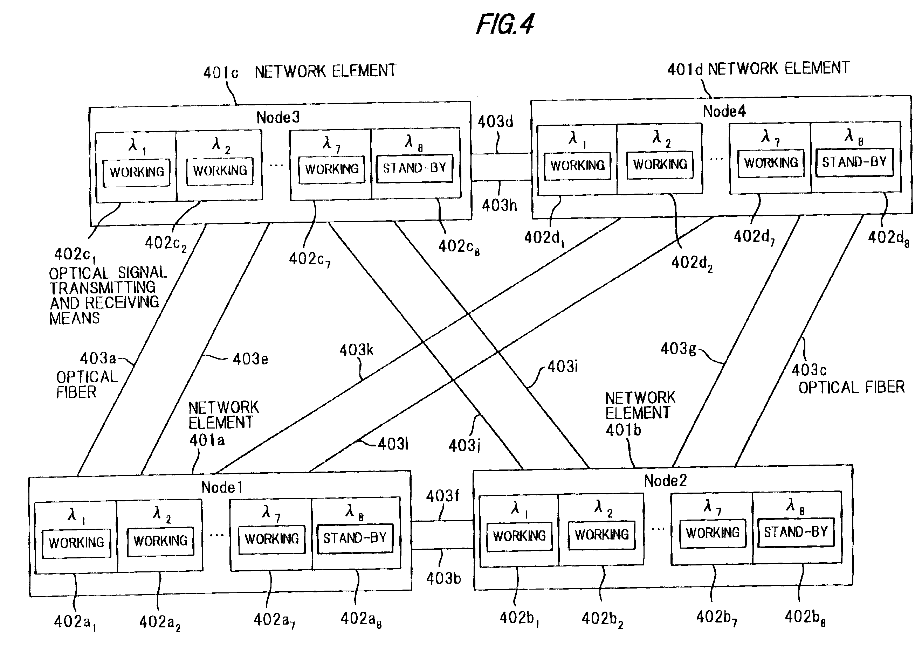

FIG.4 shows an example of the second embodiment, where the total number of wavelengths used is eight, wavelengths λ1 to λ7 are assigned to the working system and a wavelength λ8 is assigned to the stand-by system. The operation of this example is the same as that described above about the second embodiment in FIG .3. In this example, the device utilization efficiency is 7/8 when no fault occurs. Namely, in this example, the installation and operation cost can be improved by about 40%, like the example in FIG. 2.

Though, in the above embodiments, of n wavelengths, (n-1) wavelengths are used as the working system and one wavelength is used as the stand-by system, a plurality of wavelengths may be assigned to the stand-by system. Namely, when, of n wavelengths, (n-s) wavelengths are assigned to the working system and s wavelengths are assigned to the stand-by system while satisfying n>2s, the device utilization efficiency becomes (1-(s/n)) when no fault occurs. Thus, it is greater than the device utilization efficiency, 1/2 in the case that a stand-by system is provided to each of the working-system transmitting and receiving means.

Also, the working system can be separated into m groups, each of which is provided with several wavelengths that can be assigned to a working-system wavelength and a stand-by-system wavelength. For example, one stand-by wavelength can be assigned to each of the m groups, and, by jointly owning the stand-by wavelength assigned in each of the m groups, the device utilization can be enhanced. In this case, the number of wavelengths to be assigned to each group can be varied when necessary. Also, the number of stand-by-system wavelengths to be assigned to each group can be varied.

Services available in the light-wave network system can include an arbitrary signal, such as Internet and MPEG etc. other than a dynamic-image, voice and data signal, and are not limited by its transmission speed. Further, an arbitrary wavelength, e.g.. 1.55 µm band or 1.3 µm band, can be used therein. Also, a suitable network element, e.g., an optical cross connect system and a optical ADM (add drop multiplexer), can be used therein.

## Claims

1. A light-wave network system using wavelength and space multiplexing, comprising:
a plurality of network elements which are connected each other through an optical fiber; and
n optical signal transmitting and receiving means, which are provided to each of said plurality of network elements, for transmitting and receiving an optical signal which is not dependent on any transmission speed and format and is provided with n wavelengths λ1 to λn different from each other;
wherein, of said n wavelengths, (n-s) wavelengths are assigned to a working system and s wavelength is assigned to a stand-by system, and said a stand-by-system wavelength is jointly owned by said (n-s) working-system wavelengths, where n and s are positive integers and n>2s is satisfied.

2. A light-wave network system, according to claim 1, wherein;
said stand-by wavelength of one is jointly owned by said working-system wavelengths of (n-1).

3. A light-wave network system, according to claim 1 or 2, further comprising:
a working-system optical fiber and a stand-by-system optical fiber.

4. A system, according to claim 3, further comprising:
means for judging a communication fault caused by the trouble of said optical signal transmitting and receiving means and a communication fault caused by the disconnection of said optical fiber; and
means for switching said working-system wavelength, where the fault occurs, to said stand-by-system wavelength when the fault occurs at said optical signal transmitting and receiving means in the network, and for switching to said stand-by optical fiber when the fault by the disconnection of said working-system optical fiber occurs, to conduct the transmitting and receiving of an optical signal.

5. A light-wave network system using wavelength and space multiplexing, comprising:
a plurality of network elements which are connected each other through an optical fiber; and
n optical signal transmitting and receiving means, which are provided to each of said plurality of network elements, for transmitting and receiving an optical signal which is not dependent on any transmission speed and format and is provided with a plurality of wavelengths different from each other;
wherein said plurality of wavelengths are divided into a plurality of groups each of which includes a plurality of wavelengths different from each other, the plurality of wavelengths in each of said plurality of groups are assigned to a plurality of working-system wavelengths and to a stand-by-system wavelength less than the working-system wavelengths, and the stand-by-system wavelength is jointly owned by the working-system wavelengths.

6. A light-wave network system using wavelength and space multiplexing, comprising:
a plurality of network elements which are connected each other through an optical fiber; and
(n x m) optical signal transmitting and receiving means, which are provided to each of said plurality of network elements, for transmitting and receiving an optical signal which is not dependent on any transmission speed and format and is provided with (n x m) wavelengths λ1 to λnm different from each other;
wherein said (n x m) wavelengths λ1 to λnm are divided into m groups, of n wavelengths in each of said m groups, (n-s) wavelengths are assigned to working-system wavelengths and a a wavelength is assigned to a stand-by-system wavelength, and the stand-by-system wavelength of s is jointly owned by the working-system wavelengths of (n-s), where m, n and s are positive integers and n>2s is satisfied..

7. A light-wave network system, according to claim 5 or 6, wherein:
in each of said plurality of groups, said stand-by wavelength of one is jointly owned by said working-system wavelengths of (n-1).

8. A system, according to claim 5, 6 or 7, further comprising:
a working-system optical fiber and a stand-by-system optical fiber.

9. A system, according to any one of claims 1 to 8, wherein
an optical signal of said stand-by-system wavelength is terminated at each of said network elements where the optical signal is passed through or processed.

10. A system, according to claim 8 or 9, wherein:
each of said plurality of groups comprises means for judging a communication fault caused by the trouble of said optical signal transmitting and receiving means and a communication fault caused by the disconnection of said optical fiber; and means for switching said working-system wavelength, where the fault occurs, to said stand-by-system wavelength when the fault occurs at said optical signal transmitting and receiving means in the network, and for switching to said stand-by optical fiber when the fault by the disconnection of said working-system optical fiber occurs, to conduct the transmitting and receiving of an optical signal.
